# EUROPÄISCHE PATENTANMELDUNG

(11) **EP 4 273 025 A1**
(43) Veröffentlichungstag der Anmeldung: **08.11.2023**
(21) Anmeldenummer: 22172034.5
(22) Anmeldetag: 06.05.2022
(51) Int. Cl.: B62D 5/00, B62D 5/04, B62D 15/02

(54) **STEER-BY-WIRE-LENKSYSTEM UND VERFAHREN ZUM BETREIBEN EINES STEER-BY-WIRE-LENKSYSTEMS IN EINEM NORMALBETRIEBSMODUS UND IN EINEM SONDERBETRIEBSMODUS**

(71) Anmelder: thyssenkrupp Presta Aktiengesellschaft, 9492 Eschen (LI); thyssenkrupp AG, 45143 Essen (DE)
(72) Erfinder: Lapis, Leonard, 9466 Sennwald (CH); Lang, Dominik, 6800 Feldkirch (AT); Arányi, Miklós, 9445 Rebstein (CH); Dobcsanyi, Akos, 9493 Mauren (LI)
(74) Vertreter: thyssenkrupp Intellectual Property GmbH

(57) **Zusammenfassung**

Die vorliegende Erfindung betrifft ein Verfahren zum Betreiben eines Steer-by-Wire-Lenksystems (1) eines Kraftfahrzeugs mit einem Lenkeingabemittel (2), über das ein Lenkbefehl vorgegeben werden kann, und mit einem Lenkgetriebe (3), das einen von einem Elektromotor (4) antreibbaren Lenksteller (5) und ein Koppelement (6) aufweist, wobei in einem Normalbetriebsmodus zur Umsetzung eines Lenkbefehls in eine Lenkbewegung von lenkbaren Rädern (7) eines Kraftfahrzeugs ein Steuersignal (11) an den Elektromotor (4) des Lenkstellers (5) gesendet wird, der Elektromotor (4) das empfangene Steuersignal (11) in eine mechanische Bewegung des Lenkstellers (5) umsetzt, wobei der Lenksteller (5) auf das Koppelelement (6) einwirkt, und wobei der Elektromotor (4) in einem Sonderbetriebsmodus in einem Generatorbetrieb betrieben wird.

Ferner betrifft die Erfindung ein Steer-by-Wire-Lenksystem (1), das ausgebildet ist, nach einem solchen Verfahren betrieben zu werden.

## Beschreibung

Die Erfindung betrifft ein Steer-by-Wire-Lenksystem für ein Kraftfahrzeug mit einem Lenkeingabemittel, über das ein Lenkbefehl vorgegeben werden kann, und mit einem Lenkgetriebe, das einen Lenksteller mit einem Elektromotor und ein Koppelelement aufweist, wobei der Elektromotor des Lenkstellers ausgebildet ist, zur Umsetzung eines Lenkbefehls in eine Lenkbewegung von lenkbaren Rädern eines Kraftfahrzeugs ein Steuersignal zu empfangen und das empfangene Steuersignal in eine mechanische Bewegung des Lenkstellers umzusetzen, wobei der Lenksteller ausgebildet ist, zur Umsetzung des Lenkbefehls auf das Koppelelement einzuwirken. Des Weiteren betrifft die Erfindung ein Verfahren zum Betreiben eines solchen Steer-by-Wire-Lenksystems, wobei in einem Normalbetriebsmodus zur Umsetzung eines Lenkbefehls in eine Lenkbewegung von lenkbaren Rädern eines Kraftfahrzeugs ein Steuersignal an den Elektromotor des Lenkstellers gesendet wird, der Elektromotor das empfangene Steuersignal in eine mechanische Bewegung des Lenkstellers umsetzt, wobei der Lenksteller auf das Koppelelement einwirkt.

In einem klassischen Lenksystem für ein Kraftfahrzeug wird ein Lenkbefehl, welcher durch einen Fahrer über ein Lenkeingabemittel auf einen Lenkstrang eingebracht wird, mittels einer mechanischen Kopplung an ein Lenkgetriebe übertragen, wo eine dem Lenkbefehl entsprechende Verdrehung mindestens eines lenkbaren Rades bewirkt wird. Aus dem Stand der Technik ist beispielsweise aus der Druckschrift EP 2 353 968 B1 bekannt, dass ein klassisches Lenksystem dahingehend erweitert werden kann, dass ein Elektromotor den über das Lenkeingabemittel eingegebenen Lenkbefehl mittels einer Wirkverbindung zum Lenksystem unterstützt. Dadurch wird das Drehmoment verringert, das von einem Fahrer eines Kraftfahrzeugs auf das Lenkeingabemittel aufgebracht werden muss, um eine bestimmte Verdrehung des mindestens einen lenkbaren Rades zu erzielen. Dennoch existiert - auch bei einem Ausfall des Elektromotors - eine mechanische Verbindung zwischen Lenkeingabemittel und dem mindestens einen lenkbaren Rad, sodass eine Lenkbarkeit des Kraftfahrzeugs auch bei Elektronikproblemen weiterhin gewährleistet ist.

Aus dem Stand der Technik sind als eine weitere Fortbildung solcher elektromechanischer Lenksysteme Steer-by-Wire-Lenksysteme für Kraftfahrzeuge bekannt. Dabei wird auf die mechanische Kopplung zwischen dem Lenkeingabemittel und dem Lenkgetriebe verzichtet. Stattdessen wird der Lenkbefehl mittels Sensoren erfasst und in ein elektrisches Signal umgewandelt, welches dann an einen Elektromotor, der mit dem Lenkgetriebe wirkverbunden ist, weitergeleitet wird, um eine dem Lenkbefehl entsprechende Verdrehung des mindestens einen lenkbaren Rades zu bewirken. Ein solches Steer-by-Wire-Lenksystem offenbart beispielsweise die Druckschrift DE 10 2018 115 329 A1. Steer-by-Wire-Lenksysteme bringen diverse Vorteile mit sich. So wird bei Steer-by-Wire-Lenksystemen beispielsweise weniger Bauraum benötigt. Zudem werden die benötigten Bauelemente mechanisch weniger stark beansprucht, als die benötigten Bauelemente bei klassischen Lenksystemen.

Neben den Vorteilen solcher Steer-by-Wire-Lenksysteme entstehen durch die mechanische Entkopplung zwischen Lenkeingabemittel und Lenkgetriebe neue Probleme, die einer zuverlässigen Lösung bedürfen, um ein sicheres Fahren sicherzustellen. Zur besseren Handhabung dieser Probleme werden viele Komponenten eines Steer-by-Wire-Lenksystems redundant ausgebildet, um die Ausfallsicherheit zu erhöhen. So wird in der Druckschrift WO 2019/154903 A1 ein elektromechanisches Lenksystem mit einem redundant ausgelegten Steuergerät beschrieben.

Dennoch gibt es einen steten Bedarf, die Sicherheit beim Betrieb eines Steer-by-Wire-Lenksystems zu erhöhen und Steer-by-Wire-Lenksysteme noch sicherer auszugestalten. Vor diesem Hintergrund ist es eine Aufgabe der vorliegenden Erfindung, ein Verfahren zum Betreiben eines Steer-by-Wire-Lenksystems und ein Steer-by-Wire-Lenksystem bereitzustellen, mit denen eine erhöhte Sicherheit für den Fahrer eines Kraftfahrzeugs erreicht wird. Insbesondere soll die Sicherheit für den Fall erhöht werden, dass der Lenksteller eines Steer-by-Wire-Lenksystems nicht mehr auf einen vorgegebenen Lenkbefehl reagiert.

Zur Lösung dieser Aufgabe werden ein Verfahren zum Betreiben eines Steer-by-Wire-Lenksystems eines Kraftfahrzeugs sowie ein Steer-by-Wire-Lenksystem gemäß den unabhängigen Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Verfahren zum Betreiben eines Steer-by-Wire-Lenksystems eines Kraftfahrzeugs vor, wobei das Steer-by-Wire-Lenksystem ein Lenkeingabemittel, über das ein Lenkbefehl vorgegeben werden kann, und ein Lenkgetriebe, das einen von einem Elektromotor antreibbaren Lenksteller und ein Koppelement aufweist, umfasst, wobei in einem Normalbetriebsmodus zur Umsetzung eines Lenkbefehls in eine Lenkbewegung von lenkbaren Rädern eines Kraftfahrzeugs ein Steuersignal an den Elektromotor des Lenkstellers gesendet wird, der Elektromotor das empfangene Steuersignal in eine mechanische Bewegung des Lenkstellers umsetzt, wobei der Lenksteller auf das Koppelelement einwirkt, und wobei der Elektromotor in einem Sonderbetriebsmodus in einem Generatorbetrieb betrieben wird. Der Sonderbetriebsmodus ist dabei insbesondere ein Betriebsmodus, in dem das Steer-by-Wire-Lenksystem betrieben wird, wenn ein gravierender Fehler in dem Lenksystem und/oder ein Funktionsausfall in dem Steer-by-Wire-Lenksystem detektiert wird. Ein gravierender Fehler oder ein Funktionsausfall, der zu einem Wechsel in den Sonderbetriebsmodus führt, ist insbesondere dann gegeben, wenn der Lenksteller des Steer-by-Wire-Lenksystems nicht mehr auf einen vorgegebenen Lenkbefehl reagiert, also ein Kraftfahrzeug über das Lenkeingabemittel des Steer-by-Wire-Lenksystems nicht mehr lenkbar ist. Dadurch, dass der Elektromotor des Lenkstellers in dem Sonderbetriebsmodus in dem Generatorbetrieb betrieben wird, wird der Elektromotor vorteilhafterweise als elektromotorische Bremse genutzt, die Lenkbewegungen von lenkbaren Rädern eines Kraftfahrzeugs einschränkt beziehungsweise dämpft. Dabei wird ausgenutzt, dass eine Wirkverbindung zwischen dem Elektromotor des Lenkstellers und den lenkbaren Rädern eines Kraftfahrzeugs besteht. So sind lenkbare Räder insbesondere über Spurstangen an einer Zahnstange angeordnet, auf die der Lenksteller einwirken kann. Ein Verstellen des Radwinkels der gelenkten Räder führt so zu einer Bewegung der Zahnstange und über die Zahnstange zu einer Bewegung des Lenkstellers, der wiederum auf den Elektromotor einwirkt. Durch den Generatorbetrieb wird die kinetische Energie in elektrische Energie umgewandelt, wodurch die Brems- beziehungsweise Dämpfungswirkung hervorgerufen wird. Vorteilhafterweise ist die erzeugte elektrische Energie und somit die Dämpfwirkung proportional zur kinetischen Energie. Insbesondere ein unkontrolliertes "Flattern" des wenigstens einen lenkbaren Rades lässt sich so verhindern. Es wird vorteilhafterweise eine Verdrehsicherung für die lenkbaren Räder eines Kraftfahrzeugs bereitgestellt. Ein Kraftfahrzeug lässt sich so vorteilhafterweise verbessert kontrolliert und somit sicherer anhalten. Vorteilhafterweise lässt sich ein stabiler Geradesauslauf bis zum Anhalten des Kraftfahrzeugs realisieren.

Insbesondere ist vorgesehen, dass ein Abbremsen des Kraftfahrzeugs bis zum Stillstand mittels einer radindividuellen Schlupfregelung erfolgt. Auf diese Weise kann ein verbesserter Abbremsprozess realisiert werden. Liegt keine Möglichkeit zu einer radindividuellen Schlupfregelung vor, so ist vorteilhafterweise vorgesehen, dass als Bremsreferenzwert das Bremspotenzial des Rades mit dem geringsten Bremspotenzial verwendet wird. Auf diese Weise wird vorteilhafterweise vermieden, dass ein Rad während des Abbremsens blockiert und dadurch die Fahrbahn des Fahrzeuges schwerer zu kontrollieren wird.

Weiter ist vorteilhafterweise vorgesehen, dass beim Einsetzen des Generatorbetriebes alle weiteren lenkbaren Achsen des Kraftfahrzeuges einer Referenztrajektorie folgen, um den sicheren Abbremsprozess zu unterstützen.

Eine vorteilhafte Ausgestaltung des Verfahrens sieht vor, dass zumindest zwei Phasen des Elektromotors des Lenkstellers elektrisch leitend miteinander verbunden werden.

Vorteilhafterweise lässt sich auf diese Weise bereits eine Brems- beziehungsweise Dämpfungswirkung erzielen.

Insbesondere ist vorgesehen, dass die zumindest zwei Phasen des Elektromotors miteinander kurzgeschlossen werden, um die zumindest zwei Phasen des Elektromotors elektrisch leitend miteinander zu verbinden. Dieses Kurzschließen hat den Vorteil, dass eine vergleichsweise einfache und somit kostengünstige Realisierung des Verfahrens ermöglicht wird. Darüber hinaus lässt sich auf diese Weise sehr schnell eine Dämpfungs- beziehungsweise Bremswirkung erzielen.

Eine besonders vorteilhafte Weiterbildung sieht vor, dass sämtliche Phasen des Elektromotors elektrisch leitend miteinander verbunden werden. Im Falle eines Kurzschließens werden dann vorteilhafterweise sämtliche Phasen des Elektromotors kurzgeschlossen. Vorteilhafterweise wird dadurch, dass sämtliche Phasen des Elektromotors elektrisch leitend miteinander verbunden werden, die Dämpfungs- beziehungsweise Bremswirkung erhöht.

Als weitere vorteilhafte Ausgestaltung ist vorgesehen, dass der Elektromotor in dem Generatorbetrieb mit maximaler Stromentnahme betrieben wird. Die maximale Stromentnahme bezieht sich dabei auf die für den jeweils konkret eingesetzten Elektromotor technisch maximal mögliche Stromentnahme. Dadurch, dass der Elektromotor in dem Generatorbetrieb mit maximaler Stromentnahme betrieben wird, wird die Dämpfungs- beziehungsweise Bremswirkung des Elektromotors vorteilhafterweise weiter erhöht.

Gemäß einer weiteren vorteilhaften Ausgestaltung wird der in dem Generatorbetrieb erzeugte Strom in einem Energiespeicher gespeichert. Vorteilhafterweise wird der Elektromotor dadurch, insbesondere im Vergleich zu einem Kurzschließen der Phasen, weniger stark belastet und es lassen sich Schäden an dem Elektromotor in dem Generatorbetrieb verbessert vermeiden. Zudem kann die von dem Elektromotor umgewandelte und einem Energiespeicher zugeführte elektrische Energie genutzt werden, insbesondere um bei Bedarf weitere Assistenzsysteme mit elektrischer Energie zu versorgen, die für ein sicheres Anhalten des Kraftfahrzeugs eingesetzt werden können. Als Energiespeicher ist insbesondere ein Akkumulator und/oder ein Kondensator vorgesehen.

Weiter vorteilhaft ist vorgesehen, dass der in dem Generatorbetrieb erzeugte Strom über ohmsche Widerstände in Wärme umgewandelt wird. Vorteilhafterweise besteht bei dieser Ausgestaltung nicht das Problem, dass ein Energiespeicher keine Energie mehr aufnehmen kann. Insbesondere kann eine solche Option der Umwandlung des von dem Elektromotor erzeugten Stroms in Wärmeenergie über ohmsche Widerstände ergänzend zu der Option des Speicherns des erzeugten Stroms in einem Energiespeicher vorgesehen werden.

Bei einer weiteren vorteilhaften Ausgestaltung des Verfahrens wird der Elektromotor in dem Generatorbetrieb gekühlt, insbesondere dann, wenn ein Kurzschließen der Phasen des Elektromotors vorgesehen ist. Schäden an dem Elektromotor lassen sich somit vorteilhafterweise besser vermeiden und damit auch ein Ausfall der Dämpfungs- beziehungsweise Bremswirkung des Elektromotors.

Insbesondere ist vorgesehen, dass der Elektromotor in dem Sonderbetriebsmodus betrieben wird, wenn das Vorliegen eines vordefinierten schwerwiegenden Ausnahmezustands erkannt wurde. Der Sonderbetriebsmodus ist insofern insbesondere ein Notbetriebsmodus. Insbesondere ist ein solcher schwerwiegender Ausnahmezustand dann gegeben, wenn der Lenksteller nicht mehr oder nicht in vorgegebener Weise auf vorgegebene Lenkbefehle reagiert, insbesondere weder auf in einem autonomen Fahrmodus eines Kraftfahrzeugs von einer Steuereinheit des Kraftfahrzeugs vorgegebene Lenkbefehle noch von einem Fahrer in einem manuellen oder teilmanuellen Fahrmodus eines Kraftfahrzeugs über das Lenkeingabemittel vorgegebene Lenkbefehle. Sollten Lenkbefehle entweder noch von einer Steuereinheit vorgegeben oder von einem Fahrer über das Lenkeingabemittel vorgegeben werden können, so sollte ein Wechsel in den Sonderbetriebsmodus vorzugsweise vermieden werden, es sei denn dass insbesondere weitere Kriterien für das Vorliegen des schwerwiegenden Ausnahmezustands erfüllt sind. Das kann insbesondere dann der Fall sein, wenn das Kraftfahrzeug verunfallt ist, aber noch nicht zum Stillstand gekommen ist.

Für eine Erkennung des vordefinierten schwerwiegenden Ausnahmezustands wird vorteilhafterweise zumindest einer der nachfolgend genannten Zustände ausgewertet: eine Fahrzeuglage, eine Fahrzeuggeschwindigkeit, eine Fahrzeugneigung, eine projizierte Bahn, ein Fahrzeugimpuls, eine Temperatur des Lenkstellers, ein Drehmoment des Lenkstellers, eine Drehgeschwindigkeit des Lenkstellers, ein Drehmoment eines Lenkeingabebefehls, eine Drehrichtung eines Lenkeingabebefehls, eine Rotationslage eines Lenkeingabebefehls. Insbesondere werden die Zustände kontinuierlich oder in geringen zeitlichen Abständen, die insbesondere im Millisekundenbereich liegen, erfasst und ausgewertet. Die Auswertung erfolgt dabei insbesondere dahingehend, dass mit höchster Sicherheit ein schwerwiegender technischer Defekt und/oder eine Unfallsituation und/oder eine Ausbleibende Reaktion des Fahrers, beispielsweise durch eine Bewusstlosigkeit, als vordefinierter schwerwiegender Ausnahmezustand erkannt wird.

Das des Weiteren vorgeschlagene Steer-by-Wire-Lenksystem für ein Kraftfahrzeug umfasst ein Lenkeingabemittel, über das ein Lenkbefehl vorgegeben werden kann, und ein Lenkgetriebe, das einen Lenksteller mit einem Elektromotor und ein Koppelelement aufweist, wobei der Elektromotor des Lenkstellers ausgebildet ist, zur Umsetzung eines Lenkbefehls in eine Lenkbewegung von lenkbaren Rädern eines Kraftfahrzeugs ein Steuersignal zu empfangen und das empfangene Steuersignal in eine mechanische Bewegung des Lenkstellers umzusetzen, wobei der Lenksteller ausgebildet ist, zur Umsetzung des Lenkbefehls auf das Koppelelement einzuwirken, und wobei das Steer-by-Wire-Lenksystem ausgebildet ist, nach einem erfindungsgemäß ausgebildeten Verfahren betrieben zu werden, wobei das Verfahren insbesondere die vorstehend beschriebenen Merkmale einzeln oder in Kombination aufweist. So ist der Elektromotor des Lenkstellers des Steer-by-Wire-Lenksystems insbesondere ausgebildet, in einem Sonderbetriebsmodus des Steer-by-Wire-Lenksystems in einem Generatorbetrieb betrieben zu werden und somit insbesondere eine über das Lenkgetriebe auf den Elektromotor aufgebrachte Bewegung in dem Sonderbetriebsmodus zu dämpfen beziehungsweise zu bremsen. Den lenkbaren Rädern eines Kraftfahrzeugs wird so vorteilhafterweise ein Widerstand entgegengesetzt, wodurch ein unkontrolliertes Bewegen der lenkbaren Räder in einem Ausnahmezustand verhindert oder zumindest reduziert wird. Der Elektromotor des Steer-by-Wire-Lenksystems ist insbesondere ein Synchronmotor, insbesondere ein Permanentmagnet-Synchronmotor. Insbesondere kann vorgesehen sein, dass der Elektromotor mehrere Wicklungsgruppen umfasst, die jeweils über entsprechende Phasen separat ansteuerbar sind. Vorzugsweise ist der Elektromotor derart ausgebildet, dass dieser sowohl mit einzelnen Wicklungsgruppen als auch mit allen Wicklungsgruppen in dem Generatorbetrieb betrieben werden kann. Vorteilhafterweise lässt sich hierüber die Dämpfungs- beziehungsweise Bremswirkung des Elektromotors in dem Sonderbetriebsmodus steuern. Für eine maximale Bremswirkung wird der Elektromotor vorteilhafterweise mit sämtlichen Wicklungsgruppen in dem Generatorbetrieb betrieben.

Insbesondere ist vorgesehen, dass dem Elektromotor des Lenkstellers eine Steuereinheit zugeordnet ist, wobei die Steuereinheit ausgebildet ist, den Elektromotor für den Betrieb des Steer-by-Wire-Lenksystems zu steuern. Vorteilhafterweise umfasst das Steer-by-Wire-Lenksystem diese Steuereinheit. Die Steuereinheit ist dabei insbesondere eine entsprechend eingerichtete Mikrocontrollereinheit. Insbesondere kann die Steuereinheit von dem Powerpack des Elektromotors umfasst sein. Vorteilhafterweise ist die Steuereinheit ausgebildet, den Elektromotor in dem Sonderbetriebsmodus in den Generatorbetrieb zu versetzen.

Weiter vorteilhaft umfasst das Steer-by-Wire-Lenksystem eine Schaltungsanordnung, die ausgebildet ist, Phasen des Elektromotors elektrisch leitfähig miteinander zu verbinden. Vorteilhafterweise umfasst die Schaltungsanordnung hierzu ansteuerbare Schaltelemente, insbesondere MOSFETs. Insbesondere ist weiter vorgesehen, dass die Schaltungsanordnung ausgebildet ist, sämtliche Phasen des Elektromotors elektrisch leitfähig miteinander zu verbinden. Weiter ist insbesondere vorgesehen, dass die Schaltungsanordnung ausgebildet ist, Phasen des Elektromotors, insbesondere sämtliche Phasen des Elektromotors, elektrisch kurzzuschließen. Insbesondere ist vorgesehen, dass über die Schaltungsanordnungen die Phasen einzelner Wicklungsgruppen des Elektromotors, insbesondere jeweils die Phasen sämtlicher Wicklungsgruppen des Elektromotors, elektrisch leitfähig miteinander verbunden werden können.

Insbesondere als Ausgestaltungsvariante zu einem Kurzschließen der Phasen ist vorgesehen, dass die Schaltungsanordnung ausgebildet ist, die Phasen des Elektromotors derart elektrisch leitfähig miteinander zu verbinden, dass der Elektromotor in einem Generatorbetrieb betrieben wird und ein dabei erzeugter Strom einem Energiespeicher zugeführt wird und/oder über ohmsche Widerstände in Wärmeenergie umgewandelt wird. Als Energiespeicher ist dabei insbesondere ein Akkumulator oder ein Kondensator, insbesondere ein Hochleistungskondensator, vorgesehen, wobei der Energiespeicher insbesondere von dem Steer-by-Wire-Lenksystem umfasst sein kann. Insbesondere kann auch vorgesehen sein, dass ein von dem Elektromotor in dem Generatorbetrieb erzeugter Strom einem Energiespeicher des Kraftfahrzeugs zugeführt wird.

Weiter vorteilhaft umfasst die Schaltungsanordnung des Steer-by-Wire-Lenksystems ansteuerbare Schaltelemente, die die Phasen des Elektromotors verbinden. Vorteilhafterweise ist die dem Elektromotor zugeordnete Steuereinheit ausgebildet, diese Schaltelemente anzusteuern, um die Dämpfungs- beziehungsweise Bremswirkung des Elektromotors in dem Sonderbetriebsmodus auszulösen. Insbesondere ist vorgesehen, dass die Schaltelemente selbstleitende Halbleiterschaltelemente, insbesondere selbstleitende MOSFETs, sind. Vorteilhafterweise führt ein schwerer Ausnahmezustand, der die Gate-Anschlüsse der MOSFETs nicht mehr mit einem Strom zum Sperren der MOSFETs versorgt, dazu, dass die Phasen des Elektromotors elektrisch leitend miteinander verbunden werden, insbesondere dazu, dass die Phasen des Elektromotors kurzgeschlossen werden.

Gemäß einer weiteren vorteilhaften Ausgestaltung des Steer-by-Wire-Lenksystems umfasst der Elektromotor eine Kühlvorrichtung. Die Kühlvorrichtung kann entweder passiv oder aktiv ausgebildet sein. Vorteilhafterweise sorgt die Kühlvorrichtung im Falle des Kurzschließens der Phasen des Elektromotors für eine verbesserte Abfuhr der in dem Elektromotor generierten Wärmeenergie.

Des Weiteren wird ein Kraftfahrzeug mit einem erfindungsgemäß ausgebildeten Steer-by-Wire-Lenksystem vorgeschlagen, wobei das Steer-by-Wire-Lenksystem insbesondere die vorstehend genannten Merkmale einzeln oder in Kombination aufweist.

Weitere vorteilhafte Einzelheiten, Merkmale und Ausgestaltungsdetails der Erfindung werden im Zusammenhang mit den in den Figuren 1 bis 3 dargestellten Ausführungsbeispielen näher erläutert. Dabei zeigt:
- Fig. 1: in einer perspektivischen vereinfachten Ansicht ein Ausführungsbeispiel für ein erfindungsgemäß ausgebildetes Steer-by-Wire-Lenksystem;
- Fig. 2: in einem vereinfacht dargestellten Schaltbild ein Ausführungsbeispiel für einen Elektromotor eines erfindungsgemäß ausgebildeten Steer-by-Wire-Lenksystems mit Steuerungseinheit und Schaltungsanordnung; und
- Fig. 3: in einem Blockschaltbild ein Ausführungsbeispiel für ein erfindungsgemäß ausgebildetes Verfahren zum Betreiben eines Steer-by-Wire-Lenksystems.

In den verschiedenen Figuren sind gleiche Teile in der Regel mit den gleichen Bezugszeichen versehen und werden daher mitunter auch jeweils nur im Zusammenhang mit einer der Figuren erläutert.

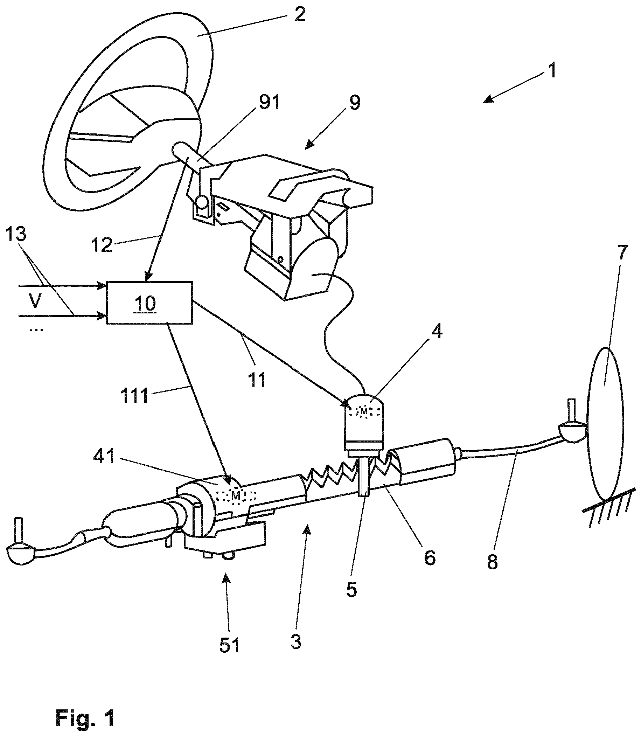

In Fig. 1 ist ein Ausführungsbeispiel für ein erfindungsgemäß ausgebildetes Steer-by-Wire-Lenksystem 1 schematisch dargestellt. Das Steer-by-Wire-Lenksystem 1 umfasst eine Lenksäule 9 mit einer Lenkwelle 91, wobei an einem Ende der Lenkwelle 91 ein als Lenkrad ausgebildetes Lenkeingabemittel 2 drehfest angeordnet ist. Über das Lenkeingabemittel 2 kann ein Fahrer dabei einen Lenkbefehl vorgeben. Das Lenkeingabemittel 2 lässt sich in bekannter Weise drehen, um ein Drehmoment als Lenkbefehl in die Lenkwelle 91 einzubringen. Ein in Fig. 1 nicht explizit bezeichneter Feedback-Aktuator kann dabei ein Lenkwiderstandsmoment bereitstellen, um ein natürliches Lenkgefühl zu vermitteln.

Des Weiteren umfasst das Steer-by-Wire-Lenksystem 1 in diesem Ausführungsbeispiel ein Lenkgetriebe 3 mit einem als Lenkritzel ausgebildeten Lenksteller 5 und einen als Zahnstange ausgebildeten Koppelelement 6. Der Lenksteller 5 umfasst dabei einen Elektromotor 4, der insbesondere als dreiphasiger Permanentmagnet-Synchronmotor ausgebildet sein kann. Mit dem Elektromotor 4 lässt sich der Lenksteller 5 zur Einwirkung auf das Koppelelement 6 und zur Auslösung einer Lenkbewegung von lenkbaren Rädern 7, die insbesondere über Spurstangen 8 mit dem Koppelelement 6 verbunden sind, antreiben. Die Spurstangen 8 selbst sind in bekannter Weise über Achsschenkel mit je einem gelenkten Rad 7 verbunden.

Ein von in Fig. 1 nicht explizit dargestellten Sensoren erfasster Lenkbefehl wird dabei in einem Normalbetriebsmodus des Steer-by-Wire-Lenksystems als erfasster Lenkbefehl 12 an eine Steuereinheit 10, insbesondere eine ECU (ECU: Electronic Control Unit), gesendet. Die Steuereinheit 10 generiert insbesondere basierend auf dem empfangenen erfassten Lenkbefehl 12 eine Steuersignal 11. Das Steuersignal 11 wird zur Umsetzung des erfassten Lenkbefehls 12 in die Lenkbewegung der lenkbaren Räder 7 an den Elektromotor 4 des Lenkstellers 5 gesendet. Der Elektromotor 4 setzt das empfangene Steuersignal 11 daraufhin in eine Rotationsbewegung des Lenkstellers 5 um, wobei der Lenksteller 5 diese Rotationsbewegung in eine entsprechende translatorische Bewegung des Koppelelements 6, umsetzt, die zur Einstellung des Lenkwinkels der lenkbaren Räder 7 führt.

Der Elektromotor 4 ist darüber hinaus ausgebildet, in einem von dem Normalbetriebsmodus abweichenden Sonderbetriebsmodus in einem Generatorbetrieb betrieben zu werden. In diesem Generatorbetrieb sorgt der Elektromotor 4 nicht für eine Umsetzung eines Steuersignals 11 in eine mechanische Bewegung des Lenkstellers 5 und somit eine Lenkbewegung der lenkbaren Räder 7. Stattdessen bremst beziehungsweise dämpft der Elektromotor 4 in dem Generatorbetrieb eine Bewegung der lenkbaren Räder 7, die von außen auf die lenkbaren Räder 7 aufgebracht wird. So würde normalerweise bei nicht angesteuertem Elektromotor 4 eine Bewegung der gelenkten Räder 7 zu einer Längsverschiebung des als Zahnstange ausgebildeten Koppelelementes 6 führen, was wiederum zu einer Drehung des als Lenkritzel ausgebildeten Lenkstellers 5 und eine Drehung des Rotors des Elektromotors 4 führen würde. Wenn ein Steuern der gelenkten Räder 7 nicht möglich ist, würde das dazu führen, dass die lenkbaren Räder 7 ohne nennenswerten Widerstand den Lenkwinkeleinschlag beliebig ändern könnten, was zu einer sicherheitskritischen Fahrsituation führen könnte.

Durch den Betrieb des Elektromotors 4 in einem Generatorbetrieb wird dieses Verhalten vorteilhafterweise verhindert oder zumindest reduziert, denn durch den Generatorbetrieb wirkt der Elektromotor 4 wie eine Bremse. Ein eingeschlagener Lenkwinkel der lenkbaren Räder 7 kann so vorteilhafterweise beibehalten werden, insbesondere bis das entsprechende Fahrzeug sicher zum Stillstand gekommen ist.

Alternativ oder zusätzlich kann das Steer-by-Wire-Lenksystem 1 einen weiteren Lenksteller 51 mit einem weiteren Elektromotor 41 aufweisen, wobei die Steuereinheit 10 ein weiteres Steuersignal 111 an den weiteren Elektromotor 41 des Weiteren Lenkstellers 51 sendet, um in entsprechender Weise einen Lenkwinkel der lenkbaren Räder 7 einzustellen.

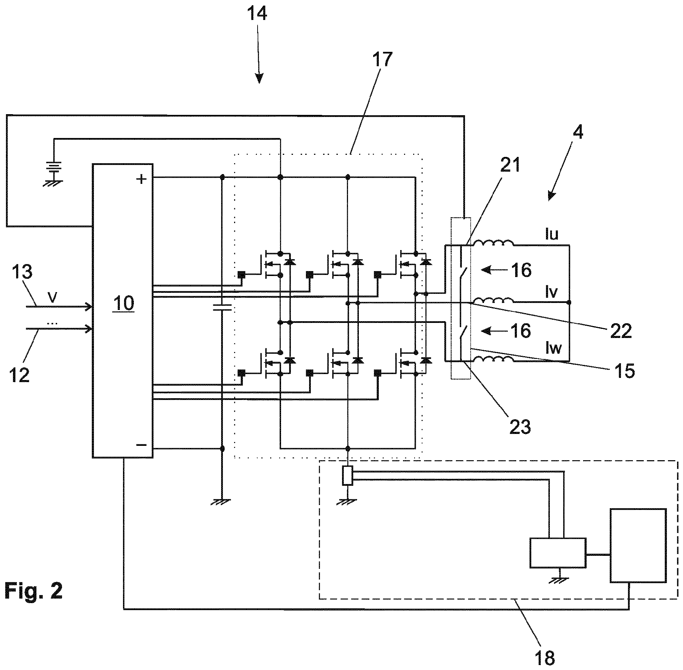

Eine beispielhafte Ausgestaltung für den Elektromotor 4 und dessen Ansteuerung ist in Fig. 2 schematisch dargestellt. Fig. 2 zeigt dabei eine Schaltungsanordnung 14 mit der Steuereinheit 10, einen drei Halbbrücken umfassenden Wechselrichter 17 über den die Phasen 21, 22, 23 des Elektromotors 4 angesteuert werden, und einen Rückkopplungszweig 18, über den die Steuereinheit 10 eine Rückmeldung über die an den Phasen anliegenden Ströme erhält. Zudem ist eine Schaltungsanordnung 15 vorgesehen, die ausgebildet ist, die Phasen 21, 22, 23 des Elektromotors 4 elektrisch leitfähig miteinander zu verbinden. Dazu weist die Schaltungsanordnung 15 die Phasen 21, 22, 23 des Elektromotors 4 verbindende ansteuerbare Schaltelemente 16, insbesondere selbstleitende MOSFETs, auf. Die Schaltungsanordnung 15 sowie die Schaltelemente 16 sind in Fig. 2 dabei nur schematisch dargestellt.

Über die Schaltelemente 16 können die Phasen 21, 22, 23 des Elektromotors 4 in dem Sonderbetriebsmodus elektrisch kurzgeschlossen werden. In einer alternativen Ausgestaltung kann vorgesehen sein, die Phasen 21, 22, 23 des Elektromotors 4 derart elektrisch leitfähig miteinander zu verbinden, dass der Elektromotor 4 in einem Generatorbetrieb betrieben werden kann, wobei die in dem Generatorbetrieb erzeugte elektrische Energie entweder einem Energiespeicher, insbesondere einer Batterie, zur Speicherung der elektrischen Energie zugeführt wird, oder über ohmsche Widerstände in Wärmeenergie umgewandelt wird. Die Ansteuerung der Schaltelemente 16 der Schaltungsanordnung 15 erfolgt mittels der Steuereinheit 10.

Die Steuereinheit 10 ist in diesem Ausführungsbeispiel insbesondere auch dazu ausgebildet zu überwachen, ob ein vordefinierter schwerwiegender Ausnahmezustand aufgetreten ist. Dazu empfängt die Steuereinheit 10 eine Vielzahl von mit Sensoren erfassten Zustandssignalen 13 und wertet diese aus. Die Zustandssignale können dabei insbesondere von Vorrichtungen von weiteren Fahrerassistenzsystemen bereitgestellt werden, insbesondere von einem ESP-System (ESP: Elektronisches Stabilitätsprogramm) und/oder einem Pre-Crash-System. Die Zustandssignale 13 betreffen dabei vorteilhafterweise das Fahrzeug als solches, insbesondere eine Fahrzeuglage, eine Fahrzeuggeschwindigkeit, eine Fahrzeugneigung, eine projizierte Bahn und/oder einen Fahrzeugimpuls, und die Technik des Steer-by-Wire-Lenksystems 1, insbesondere eine Temperatur des Lenkstellers 5, ein Drehmoment des Lenkstellers 5 und/oder eine Drehgeschwindigkeit des Lenkstellers 5. Diese Zustandssignale 13 werden vorteilhafterweise mit vordefinierten Größen verglichen und geprüft, ob diese innerhalb vorgegebener Intervalle liegen und/oder vordefinierte Schwellwerte nicht über- oder unterschreiten. Als weitere Zustände werden vorteilhafterweise die erfassen Lenkbefehle 12, insbesondere hinsichtlich eines Drehmoments eines Lenkeingabebefehls 12, einer Drehrichtung eines Lenkeingabebefehls 12 und/oder einer Rotationslage eines Lenkeingabebefehls 12, überprüft. Wird durch die Auswertung der erfassten Zustandssignale 13 und der erfassten Lenkbefehle 12 ein vordefinierter schwerwiegender Ausnahmezustand erkannt, insbesondere ein Ausbleiben von Lenkbefehlen bei einem Verlassen einer vorgegebener Bahn, so wechselt das Steer-by-Wire-Lenksystem 1 von dem Normalbetriebsmodus, in dem Lenkbefehle in gewohnter Weise von dem Steer-by-Wire-Lenksystem 1 umgesetzt werden, in den Sonderbetriebsmodus, in dem der Elektromotor 4 als Bremse im Generatorbetrieb betrieben wird.

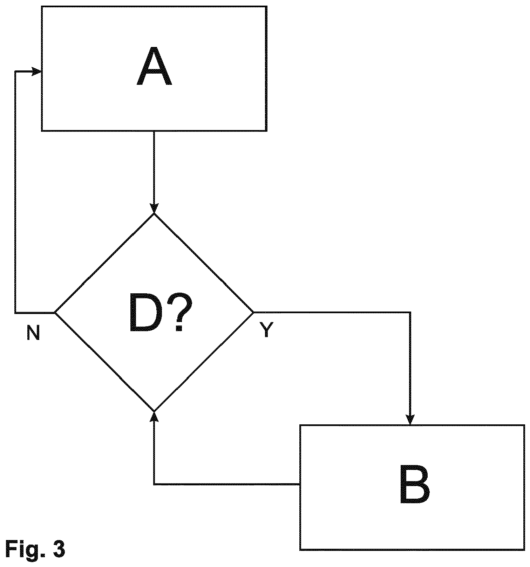

Stark vereinfacht ist ein Ausführungsbeispiel für ein Verfahren zum Betreiben eines Steer-by-Wire-Lenksystems eines Kraftfahrzeugs in Fig. 3 dargestellt. Das Steer-by-Wire-Lenksystem kann dabei insbesondere wie unter Bezugnahme auf Fig.1 erläutert, ausgebildet sein. In einem Normalbetriebsmodus A werden dabei vorgegebene Lenkbefehle erfasst und entsprechende Steuersignale zur Umsetzung der erfassten Lenkbefehle in eine Lenkbewegung von lenkbaren Rädern des Kraftfahrzeugs an den Elektromotor des Lenkstellers des Steer-by-Wire-Lenksystems gesendet, wobei der Elektromotor in dem Normalbetriebsmodus A den Lenksteller des Steer-by-Wire-Lenksystems entsprechend der empfangenen Steuersignale antreibt, und der Lenksteller über das Koppelelement des Steer-by-Wire-Lenksystems den Radlenkwinkel der lenkbaren Räder des Kraftfahrzeugs einstellt. Der Normalbetriebsmodus A kann dabei mehrere Betriebsmodi umfassen, insbesondere einen manuellen Fahrmodus, bei dem ein Fahrer über ein Lenkeingabemittel Lenkbefehle vorgibt, und einen autonomen Fahrmodus, bei dem das Fahrzeug autonom ohne Lenkeingriffe durch den Fahrer gesteuert wird.

Während des Normalbetriebsmodus A wird ständig geprüft, ob ein schwerwiegender Ausnahmezustand D vorliegt. Ist dies nicht der Fall (Zweig "N" in Fig. 3), so verbleibt das Steer-by-Wire-Lenksystem in dem Normalbetriebsmodus A. Wird hingegen ein schwerwiegender Ausnahmezustand D erkannt (Zweig "Y" in Fig. 3), so wechselt das Steer-by-Wire-Lenksystem sofort in den Sonderbetriebsmodus B und der Elektromotor treibt nicht mehr den Lenksteller an, sondern der Elektromotor wird die Bewegung des Lenkstellers dämpfend in einem Generatorbetrieb betrieben. Währenddessen wird aber ebenfalls ständig geprüft, ob ein schwerwiegender Ausnahmezustand D vorliegt. Sollte dies weiterhin der Fall sein (Zweig "Y" in Fig. 3), so verbleibt das Steer-by-Wire-Lenksystem in dem Sonderbetriebsmodus B. Andernfalls (Zweig "N" in Fig. 3) wechselt das Steer-by-Wire-Lenksystem wieder in den Normalbetriebsmodus A. Insbesondere ist zudem vorgesehen, dass das Kraftfahrzeug dann, wenn ein Vorliegen eines schwerwiegenden Ausnahmezustands D erkannt wurde, kontrolliert zum Anhalten gebracht wird, insbesondere unter Nutzung weiterer Assistenzsysteme des Kraftfahrzeugs. Durch den Sonderbetriebsmodus ist zudem ein weiterer Fahrverlauf des Kraftfahrzeugs für weitere Fahrerassistenzsystem verbessert vorhersagbar, sodass passive Sicherheitssysteme, wie im Kraftfahrzeug verbaute Airbags, verbessert auf einen möglichen Crash vorbereitet und Kraftfahrzeuginsassen so verbessert geschützt werden können.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Steer-by-Wire-Lenksystem
- 2: Lenkeingabemittel
- 3: Lenkgetriebe
- 4: Elektromotor
- 41: Elektromotor
- 5: Lenksteller
- 51: Lenksteller
- 6: Koppelelement
- 7: Lenkbares Rad
- 8: Spurstange
- 9: Lenksäule
- 91: Lenkwelle
- 10: Steuereinheit
- 11: Steuersignal
- 111: Steuersignal
- 12: erfasster Lenkbefehl
- 13: erfasste Zustandssignale
- 14: Schaltungsanordnung
- 15: Schaltungsanordnung
- 16: Schaltelement der Schaltungsanordnung (15)
- 17: Wechselrichter
- 18: Rückkopplungszweig
- 21, 22, 23: Phase des Elektromotors (4)
- A: Normalbetriebsmodus
- B: Sonderbetriebsmodus
- D: schwerwiegender Ausnahmezustand
- N: kein schwerwiegender Ausnahmezustand erkannt
- Y: schwerwiegender Ausnahmezustand erkannt

## Patentansprüche

1. Verfahren zum Betreiben eines Steer-by-Wire-Lenksystems (1) eines Kraftfahrzeugs mit einem Lenkeingabemittel (2), über das ein Lenkbefehl vorgegeben werden kann, und mit einem Lenkgetriebe (3), das einen von einem Elektromotor (4) antreibbaren Lenksteller (5) und ein Koppelement (6) aufweist, wobei in einem Normalbetriebsmodus (A) zur Umsetzung eines Lenkbefehls in eine Lenkbewegung von lenkbaren Rädern (7) eines Kraftfahrzeugs ein Steuersignal (11) an den Elektromotor (4) des Lenkstellers (5) gesendet wird, der Elektromotor (4) das empfangene Steuersignal (11) in eine mechanische Bewegung des Lenkstellers (5) umsetzt, wobei der Lenksteller (5) auf das Koppelelement (6) einwirkt, **dadurch gekennzeichnet, dass** der Elektromotor (4) in einem Sonderbetriebsmodus (B) in einem Generatorbetrieb betrieben wird.

2. Verfahren nach Anspruch 1, **dadurch gekennzeichnet, dass** für den Generatorbetrieb zumindest zwei Phasen (21, 22, 23) des Elektromotors (4) elektrisch leitend miteinander verbunden werden.

3. Verfahren nach Anspruch 2, **dadurch gekennzeichnet, dass** die zumindest zwei Phasen (21, 22, 23) des Elektromotors (4) miteinander kurzgeschlossen werden, um diese elektrisch leitend miteinander zu verbinden.

4. Verfahren nach Anspruch 2 oder Anspruch 3, **dadurch gekennzeichnet, dass** sämtliche Phasen (21, 22, 23) des Elektromotors (4) elektrisch leitend miteinander verbunden werden.

5. Verfahren nach einem der vorstehenden Ansprüche, **dadurch gekennzeichnet, dass** der Elektromotor (4) in dem Generatorbetrieb mit maximaler Stromentnahme betrieben wird.

6. Verfahren nach einem der vorstehenden Ansprüche, **dadurch gekennzeichnet, dass** der in dem Generatorbetrieb erzeugte Strom in einem Energiespeicher gespeichert wird.

7. Verfahren nach einem der vorstehenden Ansprüche, **dadurch gekennzeichnet, dass** der in dem Generatorbetrieb erzeugte Strom über ohmsche Widerstände in Wärme umgewandelt wird.

8. Verfahren nach einem der vorstehenden Ansprüche, **dadurch gekennzeichnet, dass** der Elektromotor (4) in dem Generatorbetrieb gekühlt wird.

9. Verfahren nach einem der vorstehenden Ansprüche, **dadurch gekennzeichnet, dass** der Elektromotor (4) in dem Sonderbetriebsmodus (B) betrieben wird, wenn das Vorliegen eines vordefinierten schwerwiegenden Ausnahmezustands (D) erkannt wurde.

10. Verfahren nach Anspruch 9, **dadurch gekennzeichnet, dass** für eine Erkennung des vordefinierten schwerwiegenden Ausnahmezustands (D) zumindest einer der nachfolgend genannten Zustände ausgewertet wird: eine Fahrzeuglage, eine Fahrzeuggeschwindigkeit, eine Fahrzeugneigung, eine projizierte Bahn, ein Fahrzeugimpuls, eine Temperatur des Lenkstellers (5), ein Drehmoment des Lenkstellers (5), eine Drehgeschwindigkeit des Lenkstellers (5), ein Drehmoment eines Lenkeingabebefehls, eine Drehrichtung eines Lenkeingabebefehls, eine Rotationslage eines Lenkeingabebefehls.

11. Steer-by-Wire-Lenksystem (1) für ein Kraftfahrzeug mit einem Lenkeingabemittel (2), über das ein Lenkbefehl vorgegeben werden kann, und mit einem Lenkgetriebe (3), das einen Lenksteller (5) mit einem Elektromotor (4) und ein Koppelelement (6) aufweist, wobei der Elektromotor (4) des Lenkstellers (5) ausgebildet ist, zur Umsetzung eines Lenkbefehls in eine Lenkbewegung von lenkbaren Rädern (7) eines Kraftfahrzeugs ein Steuersignal (11) zu empfangen und das empfangene Steuersignal (11) in eine mechanische Bewegung des Lenkstellers (5) umzusetzen, wobei der Lenksteller (5) ausgebildet ist, zur Umsetzung des Lenkbefehls auf das Koppelelement (6) einzuwirken, **dadurch gekennzeichnet, dass** das Steer-by-Wire-Lenksystem (1) ausgebildet ist, nach einem Verfahren gemäß einem der vorstehenden Ansprüche betrieben zu werden.

12. Steer-by-Wire-Lenksystem (1) nach Anspruch 11, **dadurch gekennzeichnet, dass** dem Elektromotor (4) eine Steuereinheit (10) zugeordnet ist, wobei die Steuereinheit (10) ausgebildet ist, den Elektromotor (4) für den Betrieb des Steer-by-Wire-Lenksystems (1) zu steuern.

13. Steer-by-Wire-Lenksystem (1) nach Anspruch 11 oder Anspruch 12, **gekennzeichnet durch** eine Schaltungsanordnung (15), die ausgebildet ist, Phasen (21, 22, 23) des Elektromotors (4) elektrisch leitfähig miteinander zu verbinden.

14. Steer-by-Wire-Lenksystem (1) nach Anspruch 13, **dadurch gekennzeichnet, dass** die Schaltungsanordnung (15) die Phasen (21, 22, 23) des Elektromotors (4) verbindende ansteuerbare Schaltelemente (16) umfasst.

15. Steer-by-Wire-Lenksystem (1) nach Anspruch 14, **dadurch gekennzeichnet, dass** die Schaltelemente (16) selbstleitende Halbleiterschaltelemente sind.
